**Europäisches Patentamt**

**European Patent Office**

**Office européen des brevets**

(19)

(11) Veröffentlichungsnummer: **0 237 772**
**B1**

(12) # EUROPÄISCHE PATENTSCHRIFT

(45) Veröffentlichungstag der Patentschrift :
21.12.88

(51) Int. Cl.⁴ : **B 64 C 27/00, F 16 F 15/32**

(21) Anmeldenummer : 87101853.7

(22) Anmeldetag : 10.02.87

(54) **Einrichtung zur Auswuchtung eines Rotorblattes.**

(30) Priorität : 06.03.86 DE 3607305

(43) Veröffentlichungstag der Anmeldung :
23.09.87 Patentblatt 87/39.

(45) Bekanntmachung des Hinweises auf die Patenterteilung : 21.12.88 Patentblatt 88/51

(84) Benannte Vertragsstaaten :
DE FR GB

(56) Entgegenhaltungen :
DE–B– 1 629 628
DE–C– 3 514 631
FR–A– 2 315 433

(73) Patentinhaber : **Messerschmitt-Bölkow-Blohm Gesell-**
**schaft mit beschränkter Haftung**
**Robert-Koch-Strasse**
**D-8012 Ottobrunn (DE)**

(72) Erfinder : **Bürgmann, Manfred**
**Richard-Schirrmann-Strasse 40**
**D-7820 Titisee-Neustadt (DE)**
Erfinder : **Friedberger, Otmar**
**Hauptstrasse 23**
**D-8014 Neubiberg (DE)**

## Beschreibung

Die Erfindung betrifft eine Auswuchtungseinrichtung gemäß dem Oberbegriff des Patentanspruchs 1.

Bei derartigen Einrichtungen beispielsweise gemäß der DE-B-16 29 628 werden die Metall- bzw. Auswuchtungsmassen in einer zumeist über die Spannweite des Rotorblattes sich erstreckenden Kammer angeordnet. Dabei sind für eine Massenverteilung über die Blattiefe mehrere solcher langgestreckten Kammern erforderlich, deren Füllung zudem, da in aller Regel die Bestimmung und Verteilung der einzelnen Auswuchtungsmassen erst nach dem Einbau der Kammern im Rotorblatt sinnvoll ist, auf blattwurzelseitige Einführöffnungen beschränkt ist. Folglich sind dem Auswuchten des Rotorblattes unter der Forderung nach weitestgehender Feinabstimmung enge Grenzen gesetzt. Im übrigen komplizieren diese im Verhältnis zur Blattspannweite langgestreckten Auswuchtungskammern den Aufbau des Rotorblattes und dessen Fertigung.

Mit diesen Mängeln ist eine Auswuchtunseinrichtung gemäß der DE-C-3 514 631 (veröffentlicht am 7.5.86) nicht behaftet, bei welcher Metall- bzw. Auswuchtungsmassen in Kugelform einer Kammer auf einem dieser gegenüber unter einem rechten Winkel verlaufenden Wege zuführbar sind, demzufolge die Kammer von der Blattober- oder Blattunterseite aus befüllbar und damit auf eine Ausrichtung in Blattlängsrichtung nicht beschränkt ist. Kammern dieser Art können folglich nicht nur in Blattlängsrichtung sich erstreckend über die Blattspannweite verteilt werden, sondern auch demgegenüber in (recht-) winkliger Erstreckungsrichtung verlaufen. Da aber die Füllung der einzelnen Kammer nur in der Anzahl der Auswuchtungsmassen variabel ist, erfordert auch eine Massenverteilung über die Blattiefe mehrere solcher Kammern.

Der Erfindung liegt daher die Aufgabe zugrunde, mit einer einzigen derartigen Auswuchtungseinrichtung für eine bestimmte Verteilung der Auswuchtungsmassen über die Blattiefe auszukommen.

Diese Aufgabe ist durch eine Auswuchtungseinrichtung der eingangs genannten Art mit den kennzeichnenden Merkmalen des Patentanspruchs 1 gelöst in der Erkenntnis, daß die Beschränkung auf eine einzige in Blattiefenrichtung sich erstreckende Kammer nicht nur eine relativ große Baulänge derselben voraussetzt, sondern daß zugleich, gegenüber der Auswuchtungseinrichtung gemäß der vorgenannten DE-C-3 514 631, die Auswuchtungsmassen in der Kammer nach Maßgabe einer geforderten Massenverteilung positionierbar und stationierbar sein müssen. In Erfüllung dieser Forderung mittels im Gewicht vernachlässigbarer Nachbildungen der Auswuchtungsmassen zum Ausfüllen von dazwischen freizuhaltenden Räumen hat die vorliegende Auswuchtungseinrichtung durch die langgestreckte Bauform der Kammer zwangsläufig noch den Vorteil, daß sie je nach Volumen zugleich für die Unterbringung sämtlicher zur Auswuchtung des Rotorblattes in Blattlängsrichtung bestimmten Massen nutzbar ist.

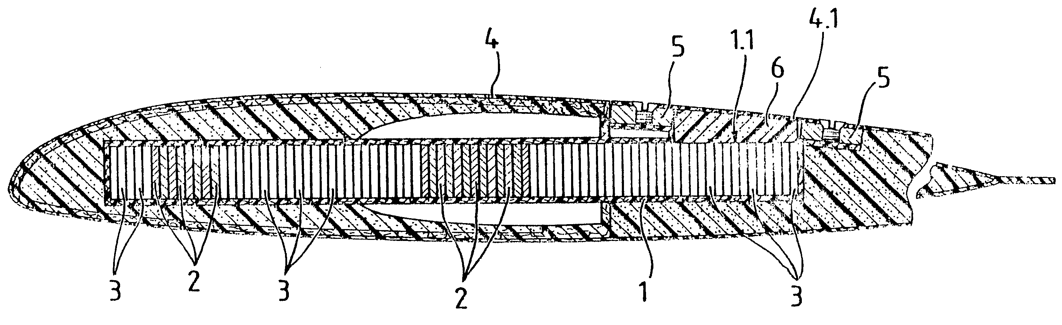

Nachfolgend werden die Erfindung und deren (in den Unteransprüchen gekennzeichneten) Weiterbildungen anhand eines Ausführungsbeispiels näher erläutert. Dazu zeigt die Zeichnung im Querschnitt ein Rotorblatt aus faserverstärktem Kunststoff üblicher Bauart beispielsweise für ein Drehflügelflugzeug. Zur statischen und dynamischen Auswuchtung ist nach dem vorhergehenden Bestimmen der Massenverteilung das Rotorblatt mit mindestens einer Kammer 1 in Form eines langgestreckten Kastens vorzugsweise mit rechteckigem Querschnitt versehen. Bei der dargestellten Erstreckung der Kammer 1 in Blattiefenrichtung ist deren Baulänge so groß gewählt, daß das Kammervolumen für die vorbestimmte Verteilung bzw. Positionierung einer bestimmen Anzahl von plattenförmigen Metall- bzw. Auswuchtungsmassen 2 über die Blattiefe ausreicht und, falls im Rotorblatt auf weitere solcher in Blattiefenrichtung sich erstreckenden Kammern 1 verzichtet werden soll, daß auch die für die Auswuchtung in Blattlängsrichtung erforderliche gesamte Gewichtsmasse untergebracht werden kann. Dabei sind zur Füllung der Kammer 1 außer den Auswuchtungsmassen 2 (bzw. Metallplatten) noch Attrappen 3 derselben z. B. aus Schaumkunststoff vorgesehen, wobei für deren Schichtfolge in Erstreckungsrichtung der Kammer 1 die jeweils geforderte Verteilung bzw. Positionierung der Auswuchtungsmassen 2 über dis Blattiefe maßgebend ist.

Zum Einbringen der Auswuchtungsmassen 2 (bzw. Metallplatten) und deren Attrappen 3 in die Kammer 1 ist diese mit einer Öffnung 1.1 vorzugsweise zur Blattoberseite mit solchem Querschnitt versehen, daß jene blockweise eingeführt werden können. Hierdurch wird beim Positionieren ein Kippen einzelner Auswuchtungsmassen 2 oder Attrappen 3 ausgeschlossen, wozu diese zweckmäßig aneinandergekettet werden z. B. durch Aufreihen über eine Schnur. Eine solche Verkettung hat zugleich den Vorteil, daß beim Zusammenstellen bis zum Erreichen der erforderlichen Formation die Auswuchtungsmassen 2 und Attrappen 3 aus der Kammer 1 leicht entfernbar sind. Dabei hat die dargestellte (jeweils gleiche) Plattenform für sämtliche Auswuchtungsmassen 2 und Attrappen 3 noch den Vorteil, daß bei entsprechender Wahl der Plattendicke eine hervorragende Feinabstimmung des gesamten Auswuchtungsgewichtes der Kammer 1 möglich ist. Selbstverständlich ist insoweit das Gewicht der Attrappen 3 vernachlässigbar.

Schließlich hat die Auswuchtungs-Kammer 1 den Vorteil, daß sie, wie dargestellt, im Rotorblatt ohne Beeinträchtigung der aerodynamischen Eigenschaften des Blattprofils integrierbar ist. Dazu ist der Deckel 4.1 der Kammer 1 als Teil der Blatthaut 4 mit einem die Kammeröffnung 1.1 begrenzenden Rahmen 5 verschraubt, wobei vorzugsweise zwischen dem Deckel 4.1 und der (Platten-) Füllung der Kammer 1 ein Abstandshalter 6 z. B. aus Schaumkunststoff eingefügt ist.

## Patentansprüche

1. Einrichtung zur Auswuchtung eines Rotorblattes aus Verbundwerkstoff, insbesondere faserverstärktem Kunststoff, mittels in eine langgestreckte Kammer (1) einzubringender Metall- bzw. Auswuchtungsmassen (2), deren Profil dem Querschnitt der Kammer entspricht, dadurch gekennzeichnet, daß in der in Blattiefenrichtung sich erstreckenden Kammer (1) die Auswuchtungsmassen (2) in Verbindung mit Attrappen (3) derselben eine Füllung von in Erstreckungsrichtung der Kammer (1) geschichteten Platten bilden mit einer Schichtfolge der Auswuchtungsmassen (2) und Attrappen (3) nach Maßgabe einer geforderten Massenverteilung über die Blattiefe.

2. Einrichtung nach Anspruch 1, dadurch gekennzeichnet, daß die Kammer (1) eine abdeckbare Öffnung (1.1) zur Blattoberseite aufweist.

3. Einrichtung nach Anspruch 2, gekennzeichnet durch einen das blockweise Einführen von Auswuchtungsmassen (2) und Attrappen (3) ermöglichenden Querschnitt der Öffnung (1.1).

4. Einrichtung nach Anspruch 1 oder 3, dadurch gekennzeichnet, daß die Auswuchtungsmassen 2 und Attrappen (3) aneinandergekettet sind.

5. Einrichtung nach Anspruch 2, dadurch gekennzeichnet, daß zwischen dem ein Teil der Blatthaut (4) bildenden Deckel (4.1) der Kammer (1) und deren Füllung ein Abstandshalter (6) eingefügt ist.

## Claims

1. A device for balancing a rotor blade made from composite material, more especially fibre-reinforced plastics material, by means of metal- or respectively balancing masses (2) which are to be introduced into an elongate chamber (1) and the profile of which corresponds to the cross-section of the chamber, characterised in that in the chamber (1) which extends in the blade depth direction the balancing masses (2), in conjunction with dummies (3) of the same, form a filling of plates stratified in the direction of extent of the chamber (1) with a layer sequence of the balancing masses (2) and dummies (3) in proportion to a required mass distribution over the blade depth.

2. A device according to claim 1, characterised in that the chamber (1) has a coverable aperture (1.1) at the blade upper side.

3. A device according to claim 2, characterised by a cross-section of the aperture (1.1) which makes possible the blockwise introduction of balancing masses (2) and dummies (3).

4. A device according to claim 1 or 3, characterised in that the balancing masses (2) and dummies (3) are bound together.

5. A device according to claim 2, characterised in that a distance piece (6) is inserted between the cover (4.1), forming a part of the blade skin (4), of the chamber (1) and the filling thereof.

## Revendications

1. Dispositif d'équilibrage d'une pale de rotor en matériau composite, en particulier en matière plastique renforcée de fibres, au moyen de masses métalliques ou d'équilibrage (2) à loger dans une chambre allongée (1) et dont le profil correspond à la section transversale de la chambre, caractérisé par le fait que dans la chambre (1), s'étendant dans le sens de la corde de la pale, les masses d'équilibrage (2), en liaison avec des modèles factices (3) de celles-ci, forment un remplissage de plaques empilées dans le sens de l'étendue de la chambre (1), les masses d'équilibrage (2) et les modèles (3) de celles-ci se succédant conformément à une répartition exigée des masses sur la corde de la pale.

2. Dispositif selon la revendication 1, caractérisé par le fait que la chambre (1) comporte une ouverture obturable (1.1) disposée sur l'extrados de la pale.

3. Dispositif selon la revendication 2, caractérisé par une section transversale de l'ouverture (1.1) permettant une introduction par blocs des masses d'équilibrage (2) et des modèles factices (3).

4. Dispositif selon la revendication 1 ou 3, caractérisé par le fait que les masses d'équilibrage (2) et les modèles factices (3) sont liés les uns aux autres.

5. Dispositif selon la revendication 2, caractérisé par le fait qu'une pièce d'écartement (6) est insérée entre le couvercle (4.1), formant une partie de la surface de revêtement (4) de la pale, de la chambre (1) et le remplissage de celle-ci.